# FASCICULE DE BREVET EUROPEEN

(11) **EP 3 443 244 B1**
(45) Date de publication et mention de la délivrance du brevet: **03.11.2021**
(21) Numéro de dépôt: 17721777.5
(22) Date de dépôt: 12.04.2017
(51) Int. Cl.: F16J 15/447, F16J 15/40

(54) **JOINT SANS CONTACT DE TYPE LABYRINTHE OBTENU PAR FABRICATION ADDITIVE**
DURCH GENERATIVE FERTIGUNG HERGESTELLTE KONTAKTLOSE LABYRINTHDICHTUNG
CONTACTLESS LABYRINTH SEAL OBTAINED BY ADDITIVE MANUFACTURING

(30) Priorité: 15.04.2016 FR 1653342
(43) Date de publication de la demande: 20.02.2019
(73) Titulaire: Safran Transmission Systems, 92700 Colombes (FR)
(72) Inventeur: BAUDUIN, Lionel, 77550 Moissy-Crayamel (FR); VIEL, Julien, 77550 Moissy-Crayamel (FR)
(74) Mandataire: Brevalex
(86) Numéro de dépôt international: PCT/FR2017/050878
(87) Numéro de publication internationale: WO 2017/178758

(56) Documents cités:
- EP-A1- 1 734 292
- EP-A1- 3 130 827
- FR-A1- 2 137 540
- FR-A1- 2 873 183
- GB-A- 2 123 498
- US-A- 4 383 720
- US-A- 4 428 587
- US-A1- 2007 262 122
- US-A1- 2011 006 485
- US-A1- 2015 001 807
- US-A1- 2015 086 343

## Description

### DOMAINE TECHNIQUE

L'invention concerne un joint assurant une étanchéité entre une pièce tournante traversant une pièce fixe, comme notamment un arbre rotatif traversant une ouverture d'une paroi de carter.

### ÉTAT DE LA TECHNIQUE ANTÉRIEURE

Un tel joint permet de réaliser par exemple une étanchéité entre l'espace interne d'un carter de transmission de puissance tel qu'un réducteur mécanique ou une boîte de vitesses et l'environnement extérieur, au niveau de l'arbre de sortie qui traverse la paroi de ce carter et qui tourne par rapport à celui-ci.

On attend d'un tel joint qu'il empêche la fuite d'un mélange d'air et de lubrifiant depuis l'espace interne du carter vers l'environnement extérieur, attendu qu'en outre la pression dans le carter peut être supérieure à la pression extérieure.

Les joints qui sont couramment mis en œuvre dans les applications dites de transmission de puissance mécanique, comme par exemples les réducteurs auxiliaires (« Accessory Gear Box ») équipant les moteurs d'aéronefs, comportent les joints à contact, les joints à lèvre et les joints sans contact.

Les joints à contact comportent un organe mobile comprenant un disque et porté par l'arbre, ainsi qu'un organe fixe porté par le carter et comprenant un élément frottant maintenu en appui sur le disque par un ressort pour assurer l'étanchéité. Les joints à lèvre comportent quant à eux principalement un anneau en élastomère maintenu en contact sur l'arbre.

Ces joints ont généralement une durée de vie trop courte, due au fait que les éléments de friction qu'ils comportent subissent des vitesses de glissement élevées sans lubrification, ce qui conduit à terme à leur détérioration.

Ainsi, le coût de ces joints est élevé, alors que leur durée de vie est insuffisante. En pratique, la détérioration de joints est une des causes principales de défaillance sur les transmissions de puissance d'aéronefs.

Les joints dits à décollement, parfois appelés joints sans contacts, donnent quant à eux lieu à frottement uniquement lors des phases de démarrage et d'arrêt. En fonctionnement, c'est-à-dire lorsque l'arbre tourne à vitesse nominale, il n'y a pas de surface en frottement : un faible espace sépare l'organe tournant porté par l'arbre de l'organe fixe porté par l'ouverture et qui entoure cet organe tournant. Les frottements qui interviennent au démarrage contribuent néanmoins à provoquer une usure réelle.

Il existe encore les joints sans contact proprement dits, encore appelés joints labyrinthe ou joint à air, avec lesquels il n'existe pas de contact direct entre l'organe tournant et l'organe fixe, y compris en phase d'arrêt et de démarrage, ces deux parties étant continuellement séparées par un faible espace. Ce faible espace constituant un chemin de fuite pour le fluide, il est conçu pour avoir une forme labyrinthique de manière à offrir une résistance significative au passage d'air. Néanmoins, il est souvent nécessaire de prévoir un apport d'air pour compenser cette fuite. Une autre solution consiste à choisir des jeux très faibles pour limiter la fuite en question, mais ceci peut conduire à une usure du joint résultant de déformations mécaniques mettant en contact l'organe fixe et l'organe mobile puisqu'ils sont alors situés à très faible distance.

En pratique, les joints sans contact sont des éléments mécaniques complexes dont l'intégration dans un carter existant est problématique, et l'étanchéité qu'ils apportent peut s'avérer insuffisante.

Les documents FR 2 873 183 A1, FR 2 137 540 A1, GB 2 123 498 A, EP 1 734 292 A1, US 2011/006485 A1, US 2015/001807 A1, US 2007/262122 A1, US 2015/086343 A1, US 4 428 587 A, US 4 383 720 A, EP 3 130 827 A1 et CN 104455465 A décrivent des joints sans contact labyrinthiques compris dans l'état de la technique.

### EXPOSÉ DE L'INVENTION

A cet effet, l'invention a pour objet un joint sans contact selon la revendication 1.

Avec cette solution, l'organe fixe et l'organe tournant peuvent être formés chacun d'une seule pièce en étant solidaires l'un de l'autre et mobiles en rotation l'un par rapport à l'autre, et en étant faiblement espacés l'un de l'autre pour que le chemin de fuite labyrinthique présente une section de passage la plus faible possible.

Le chemin de fuite peut en outre avoir une forme complexe pour accroître la résistance opposée au passage d'air, ce qui permet d'éloigner les surfaces antagonistes et donc les risques d'usure par contact ou par circulation d'impuretés tout en bénéficiant d'un taux de fuite acceptable.

Selon l'invention, l'organe tournant comporte à l'une de ses extrémités un élément de ventilation tendant à introduire du fluide dans l'une des extrémités du chemin de fuite labyrinthique pour réduire un écart de pression entre les extrémités de ce chemin de fuite labyrinthique.

L'invention concerne également un joint ainsi défini, dans lequel l'élément de ventilation est un organe centrifuge comprenant des ailettes s'étendant parallèlement à l'axe de rotation de l'organe tournant en étant portées par une face d'extrémité de cet organe tournant.

L'invention concerne également un joint ainsi défini, dans lequel l'organe fixe comprend un rebord situé en vis-à-vis des ailettes de l'élément de ventilation pour canaliser l'air ventilé vers le chemin de fuite labyrinthique.

Selon l'invention, le joint comporte à l'autre des extrémités de l'organe tournant un élément de déshuilage.

L'invention concerne également un joint ainsi défini, dans lequel l'élément de déshuilage comporte une série de lamelles radiales pour centrifuger des gouttes d'huile évoluant dans son voisinage.

L'invention concerne également un joint ainsi défini, dans lequel l'élément de déshuilage comporte une mousse métallique à son pourtour pour centrifuger des gouttes d'huile évoluant dans son voisinage.

L'invention concerne également un moteur d'aéronef équipé d'une transmission de puissance auxiliaire comprenant un joint sans contact selon l'une des revendications précédentes.

### BRÈVE DESCRIPTION DES DESSINS

- La figure 1 est une vue en coupe montrant le joint selon l'invention équipant un arbre rotatif et une ouverture d'une paroi traversée par cet arbre ;
- La figure 2 est une vue en coupe montrant l'organe fixe du joint selon l'invention représenté seul ;
- La figure 3 est une vue en coupe montrant l'organe tournant du joint selon l'invention représenté seul ;
- La figure 4 est une vue en coupe du joint selon l'invention représenté seul ;
- La figure 5 est une vue en perspective d'un élément de déshuilage du joint selon l'invention ;
- La figure 6 est une vue en perspective d'un élément de ventilation du joint selon l'invention.

### EXPOSÉ DÉTAILLÉ DE MODES DE RÉALISATION PARTICULIERS

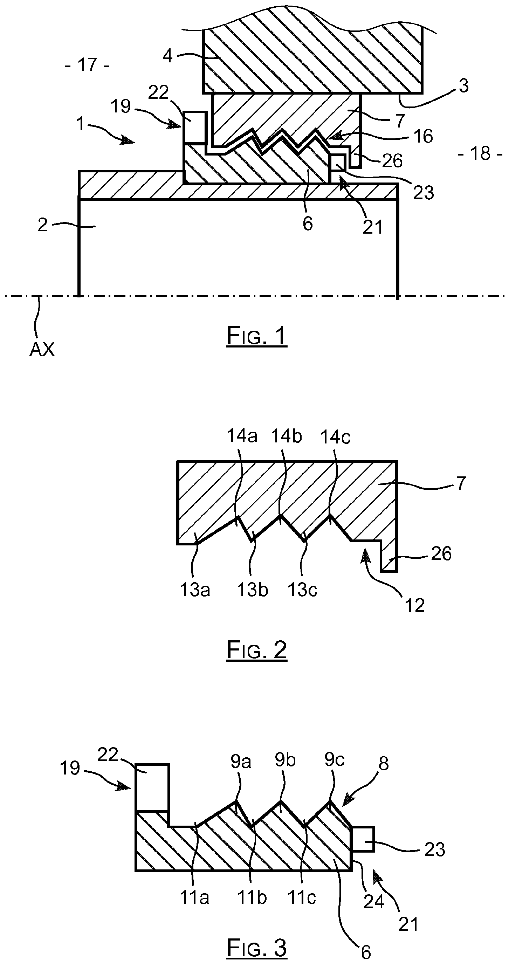

Dans l'exemple de la figure 1, le joint selon l'invention repéré par 1 est monté sur un arbre 2 tournant autour d'un axe AX et traversant une ouverture 3 d'une paroi 4 d'un carter. Il comporte un organe tournant 6 ayant une forme de révolution et entourant l'arbre 2 en y étant rigidement solidarisé, et un organe fixe 7 fixe qui entoure l'organe tournant et est rigidement solidarisé à la paroi 4.

Comme visible sur la figure 3, l'organe tournant 6 a une forme générale de révolution, comportant une face externe 8 pourvue d'une alternance de nervures 9a, 9b et 9c et de gorges 11a, 11b et 11c circonférentielles délimitant trois reliefs à sa face externe. De la même manière, sur la figure 2, l'organe fixe 7 qui entoure l'organe tournant comporte une face interne 12 formant ici trois relief. Ces reliefs sont constitués par une alternance de nervures 13a, 13b et 13c et de gorges 14a, 14b et 14c visible notamment sur la figure 3.

L'alternance de nervures et de gorges de l'organe tournant 6 et celle de l'organe fixe 7 sont complémentaires : les nervures 9a-9c de l'organe tournant 6 sont engagées respectivement dans les fentes 14a-14c de l'organe fixe 7. De manière analogue, les nervures 13a-13c de l'organe fixe 7 sont engagées dans les fentes 11a-11c de l'organe tournant.

Comme visible sur la figure 1, l'organe fixe 7 entour l'organe tournant 6 en étant emboîté autour de celui-ci de par leurs alternances de nervures et de fentes, mais sans que la face externe 8 de l'organe tournant 6 ne soit en appui sur la face interne 12 de l'organe fixe 7, un jeu radial suffisant étant prévu entre ces surfaces.

L'espace radial, correspondant au jeu radial, qui est situé entre la face externe 8 et la face interne 12, et qui s'étend circonférentiellement le long de l'organe tournant 6 et de l'organe fixe 7 constitue ainsi un chemin de fuite, repéré par 16, et par lequel l'espace interne 17 du carter et le milieu extérieur 18 sont reliés.

Le chemin de fuite 16 a une forme de labyrinthe grâce aux alternances de nervures et de gorges de l'organe tournant et de l'organe fixe, de sorte que ce chemin introduit une perte de charge importante qui s'oppose au passage d'air ou de fluide de l'espace interne 17 à l'environnement extérieur 18, de manière à constituer une barrière entre ces deux espaces.

Comme il ressort des figures, l'organe fixe est emboîté circonférentiellement autour de l'organe tournant et ne peut en être désolidarisé. L'invention consiste fabriquer conjointement l'organe tournant et l'organe fixe par fabrication additive dans une même opération de fabrication pour obtenir ces deux pièces emboîtées l'une autour de l'autre et présentant un jeu radial suffisant.

Dans ce contexte, la fabrication additive peut être assurée par exemple avec le procédé désigné par la marque déposée CLAD (Construction Laser Additive Directe). Ce procédé consiste à utiliser un appareillage comprenant un dispositif générant un faisceau laser pour faire fondre sur un substrat une ou des poudres métalliques apportées par une buse de dépôt, de manière à constituer successivement des couches de dépôt d'un matériau métallique.

D'une manière générale, d'autres procédés de fabrication additive peuvent être utilisés, comme le procédé EBM (Electron Beam Melting signifiant fusion par faisceau d'électron) ou encore le procédé SLM (Selective Laser Melting signifiant fusion sélective laser).

Les poudres fondues par le laser constituent alors un dépôt homogène et dense sur la surface ou couche qui les porte, qui est elle aussi fusionnée au cours du processus.

Le jeu radial qui est prévu entre la face externe de l'organe tournant et la face interne de l'organe fixe assure qu'en fonctionnement, c'est-à-dire lorsque l'organe tournant tourne dans l'organe fixe, cette rotation se déroule sans contact ni frottement, et par là même sans usure.

Grâce au recours à la construction additive pour former l'organe tournant et/ou l'organe fixe, d'une part le jeu radial entre ces éléments peut être diminué et d'autre part le nombre de nervures et de gorges peut être augmenté, et leur géométrie peut être rendue plus complexe, ce qui permet d'augmenter significativement le niveau d'étanchéité qui est offert par le joint sans contact. Autrement dit, le débit de fluide circulant dans le chemin de fuite est extrêmement faible grâce à un plus grand nombre de nervures et de gorges et/ou un plus faible jeu radial.

Mais l'efficacité de la barrière constituée par le chemin de fuite labyrinthique 16 vis-à-vis du passage de fluide et/ou d'huile de l'espace interne vers le milieu extérieur 18 peut être encore augmentée en prévoyant d'une part un élément de déshuilage 19 et d'autre part un élément de ventilation 21.

L'élément de déshuilage 19 est situé en entrée du chemin de fuite 16, c'est-à-dire du côté de l'espace interne 17, pour limiter l'admission d'huile dans ce chemin, alors que l'élément de ventilation 21 est situé en sortie du chemin 16 et tend à établir dans ce chemin 16 une circulation d'air inverse pour s'opposer à la sortie d'air ou de fluide en provenance de l'espace interne 17.

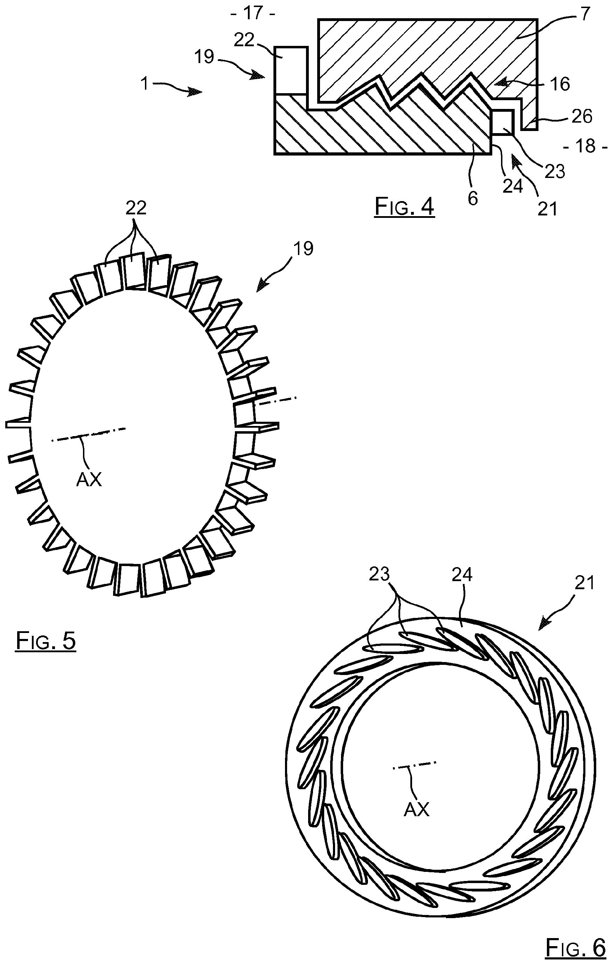

Comme visible sur la figure 5, l'élément de déshuilage 19 a ici une forme de roue pourvue d'aubes ou lamelles radiales 22 régulièrement espacées les unes des autres à sa périphérie. Cet élément 19 est situé au niveau de l'extrémité de l'organe tournant 6 dont il fait partie intégrante, et ses lamelles 22 sont situées en vis-à-vis de l'entrée du chemin 16. Dans ces conditions, des gouttes d'huile évoluant au voisinage de l'entrée du chemin 16 sont centrifugées par les lamelles 22 dès lors qu'elles s'approchent de cette entrée, de sorte qu'en pratique elles ne peuvent finalement pas entrer dans ce chemin de fuite 16.

Comme visible sur la figure 4 chaque lamelle a sa base située radialement sensiblement à mi-hauteur des nervures 9a-9c de l'organe tournant, et son sommet situé radialement au-delà des sommets des nervures 9a-9c. Ces lamelles sont par ailleurs situées le long de l'axe AX au niveau de l'entrée du chemin 16, de manière à délimiter en outre une sorte de chicane supplémentaire pour ce chemin de fuite 16. Les différentes lamelles 22 sont régulièrement espacées les unes des autres autour de l'axe AX, chaque lamelle ayant une forme de plaque rectangulaire orientée d'orientation radiale parallèle à l'axe AX.

A la place de la roue 19, il est également possible d'utiliser une mousse métallique portée par l'organe tournant 6, pour d'une manière analogue centrifuger les gouttes d'huile se présentant au voisinage de l'entrée de ce chemin 16.

Comme indiqué plus haut, le joint selon l'invention comporte encore un élément de ventilation qui est situé en sortie du chemin de fuite 16, de manière à contrecarrer l'écart de pression dû au fait que la pression dans l'espace interne 17 est généralement supérieure à la pression du milieu environnant 18.

Cet élément de ventilation tend ainsi continuellement à admettre de l'air par la sortie du chemin de fuite 16 de façon à s'opposer à un flux d'air qui tendrait à traverser de chemin depuis l'espace interne 17 vers le milieu environnant 18.

Cet élément de ventilation 21 qui est représenté plus clairement sur la figure 6 assure ici une ventilation centrifuge, c'est-à-dire tendant établir un flux d'air radial s'éloignant de l'axe de rotation pour entrer dans le chemin de fuite 16 par sa sortie.

Comme visible sur la figure 6 cet élément 21 comporte des ailettes 23 portées par une face d'extrémité 24 de l'organe tournant 6, cette face d'extrémité étant généralement plane et d'orientation normale à l'axe AX. Ces ailettes 23 sont régulièrement espacées les unes des autres autour de l'axe AX, et s'étendent parallèlement à l'axe AX en présentant toutes une même inclinaison par rapport à la direction orthoradiale vis-à-vis de cet axe.

L'air situé au voisinage de la face d'extrémité 24 est ainsi centrifugé par les ailettes 23 pour être admis radialement dans la sortie du chemin de fuite 16. Complémentairement, et pour accroître l'efficacité de cet élément de ventilation 21, l'organe fixe 7 comporte dans la région de la sortie du chemin 16 un rebord circonférentiel 26 situé en vis-à-vis des ailettes 23 de l'élément 21. Chaque ailette 23 s'étend donc entre d'une part la face d'extrémité 24 de l'organe tournant 6 qui la porte et d'autre part le rebord 26 qui est quant à lui fixe, ce qui permet d'augmenter l'effet de ventilation associé à l'ensemble des ailettes 23 en canalisant le flux d'air qui les traverse.

L'élément de ventilation 21 permet ainsi d'augmenter la pression en sortie du chemin de fuite 16, pour réduire voire d'annuler la différence de pression existant entre l'entrée et la sortie du chemin de fuite 16. Ainsi, l'air de l'espace interne 17, surpressurisé par rapport au milieu extérieur, ne traverse pas le chemin de fuite 16.

Comme indiqué plus haut, le joint selon l'invention est avantageusement fabriqué avec un procédé de fabrication additive qui permet de constituer des pièces pouvant avoir des formes relativement complexes et pouvant être également emboîtées l'une dans l'autre.

Dans le cas présent, l'organe tournant qui comporte une alternance de nervures et de gorges ainsi que l'élément de déshuilage et l'élément de ventilation présente globalement une forme relativement complexe qu'il est avantageux d'obtenir par fabrication additive puisqu'elle peut alors être formée d'un seul tenant.

Par ailleurs, le fait de fabriquer par construction additive dans une même opération l'organe tournant conjointement avec l'organe fixe qui l'entoure permet en outre de réduire encore le jeu radial existant entre ces deux composants, et par là même d'accroître le niveau d'étanchéité conféré par le joint.

Dans l'exemple des figures, la face externe de l'organe tournant et la face interne de l'organe fixe sont globalement cylindriques, mais d'autres formes peuvent aussi être envisagées, comme notamment des formes de révolution globalement coniques.

## Revendications

1. Joint sans contact (1) pour un arbre rotatif (2) traversant une ouverture (3) d'une paroi (4), ce joint (1) comprenant un organe tournant (6) destiné à être porté par l'arbre (2) et un organe fixe (7) destiné à être porté par l'ouverture (3) de la paroi, l'organe tournant (6) étant emboîté dans l'organe fixe (7) tout en étant mobile en rotation par rapport à celui-ci, l'organe tournant (6) ayant une face externe (8) pourvue d'au moins une nervure circonférentielle (9a-9c) et l'organe fixe ayant une face interne (12) pourvue d'au moins une gorge (14a-14c) ou inversement, chaque nervure (9a-9c) étant partiellement engagée dans une gorge correspondante (14a-14c) pour que la face interne (12) de l'organe fixe (7) et la face externe (8) de l'organe tournant (6) délimitent conjointement un chemin de fuite labyrinthique (16), où l'organe tournant (6) et l'organe fixe (7) sont formés chacun d'une seule pièce métallique, où l'organe tournant (6) et l'organe fixe (7) ne peuvent être désolidarisés l'un de l'autre, ces organes étant obtenus conjointement dans une même opération de fabrication additive, où l'organe tournant (6) comporte à l'une de ses extrémités un élément de déshuilage (19) et où l'organe tournant (6) comporte à l'autre de ses extrémités un élément de ventilation (21) tendant à introduire du fluide dans l'une des extrémités du chemin de fuite labyrinthique (16) pour réduire un écart de pression entre les extrémités de ce chemin de fuite labyrinthique (16).

2. Joint selon la revendication dans lequel l'élément de ventilation (21) est un organe centrifuge comprenant des ailettes (23) s'étendant parallèlement à l'axe de rotation (AX) de l'organe tournant (6) en étant portées par une face d'extrémité (24) de cet organe tournant (6).

3. 4-Joint selon la revendication 2, dans lequel l'organe fixe comprend un rebord (26) situé en vis-à-vis des ailettes (23) de l'élément de ventilation pour canaliser l'air ventilé vers le chemin de fuite labyrinthique (16).

4. Joint selon la revendication 1, dans lequel l'élément de déshuilage (19) comporte une série de lamelles radiales pour centrifuger des gouttes d'huile évoluant dans son voisinage.

5. Joint selon la revendication 1, dans lequel l'élément de déshuilage (19) comporte une mousse métallique à son pourtour pour centrifuger des gouttes d'huile évoluant dans son voisinage.

6. Moteur d'aéronef équipé d'une transmission de puissance auxiliaire comprenant un joint sans contact (1) selon l'une des revendications précédentes.

## Patentansprüche

1. Kontaktlose Dichtung (1) für eine eine Öffnung (3) einer Wand (4) durchsetzende Drehwelle (2), wobei die Dichtung (1) ein von der Welle (2) zu tragendes, drehbares Teil (6) sowie ein von der Öffnung (3) der Wand zu tragendes, feststehendes Teil (7) aufweist, wobei das drehbare Teil (6) in das feststehende Teil (7) eingepasst ist und gleichzeitig drehbeweglich bezüglich desselben ist, wobei das drehbare Teil (6) eine Außenfläche (8) aufweist, die mit mindestens einer Umfangsrippe (9a-9c) versehen ist, und das feststehende Teil eine Innenfläche (12) aufweist, die mindestens eine Nut (14a-14c) aufweist, oder umgekehrt, wobei jede Rippe (9a-9c) teilweise in eine entsprechende Nut (14a-14c) eingreift, so dass die Innenfläche (12) des feststehenden Teils (7) und die Außenfläche (8) des drehbaren Teils (6) gemeinsam einen labyrinthartigen Ablaufweg (16) begrenzen, wobei das drehbare Teil (6) und das feststehende Teil (7) jeweils aus einem einzelnen Metallteil bestehen, wobei das drehbare Teil (6) und das feststehende Teil (7) nicht voneinander gelöst werden können, wobei diese Teile gemeinsam in einem additiven Fertigungsvorgang erhalten werden, wobei das drehbare Teil (6) an einem seiner Enden ein Ölabscheidungselement (19) umfasst und wobei das drehbare Teil (6) an dem anderen seiner Enden ein Lüftungselement (21) umfasst, mit dem es Flüssigkeit in eines der Enden des labyrinthartigen Ablaufweges (16) einführen soll, um eine Druckdifferenz zwischen den Enden des labyrinthartigen Ablaufweges (16) zu verringern.

2. Dichtung nach Anspruch 1,
wobei das Lüftungselement (21) ein Zentrifugalteil mit Flügeln (23) aufweist, welche sich parallel zur Drehachse (AX) des drehbaren Organs (6) erstrecken, während sie von einer Endfläche (24) des drehbaren Teils (6) getragen werden.

3. Dichtung nach Anspruch 2,
wobei das feststehende Teil einen gegenüber den Flügeln (23) des Lüftungselements befindlichen Rand (26) aufweist, um die entlüftete Luft in Richtung des labyrinthartigen Ablaufweges (16) zu kanalisieren.

4. Dichtung nach Anspruch 1, wobei das Ölabscheidungselement (19) eine Reihe von radialen Lamellen aufweist, um sich in dessen Umgebung bildende Öltropfen zu zentrifugieren.

5. Dichtung nach Anspruch 1, wobei das Ölabscheidungselement (19) an seinem Umfang eine Metallschaumstruktur umfasst, um sich in dessen Umgebung bildende Öltropfen zu zentrifugieren.

6. Mit einem Hilfstriebwerk ausgerüsteter Flugzeugmotor, der eine kontaktlose Dichtung (1) nach einem der vorhergehenden Ansprüche aufweist.

## Claims

1. Contactless seal (1) for a rotating shaft (2) passing through an opening (3) of a wall (4), this seal (1) comprising a rotating member (6) intended to be carried by the shaft (2) and a fixed member (7) intended to be carried by the opening (3) of the wall, the rotating member (6) being slotted into the fixed member (7) while being mobile in rotation with respect to it, the rotating member (6) having an outer face (8) provided with at least one circumferential ridge (9a-9c) and the fixed member having an inner face (12) provided with at least one recess (14a-14c) or vice versa, each ridge (9a-9c) being partially engaged in a corresponding recess (14a-14c) such that the inner face (12) of the fixed member (7) and the outer face (8) of the rotating member (6) jointly delimit a labyrinthine leak route (16), where the rotating member (6) and the fixed member (7) are each formed from one single part, the rotating member (6) and the fixed member (7) cannot be disconnected from each other, these members (6, 7) being jointly obtained in one same additive manufacturing operation, and the rotating member (6) comprises at one end a deoiling element, and where the rotating seal (6) comprises, at its opposite extremity, a ventilation element (21) tending to introduce fluid into one of the ends of the labyrinthine leak route (16) to reduce a pressure difference between the ends of this labyrinthine leak route (16).

2. Seal according to claim 1, wherein the ventilation element (21) is a centrifugal member comprising fins (23) extending parallel to the axis of rotation (AX) of the rotating member (6), and being carried by an end face (24) of this rotating member (6).

3. Seal according to claim 2, wherein the fixed member comprises an edge (26) situated in regard to the fins (23) of the ventilation element to channel ventilated air towards the labyrinthine leak route (16).

4. Seal according to claim 3, wherein the deoiling element (19) comprises a series of radial strips to centrifuge oil drops developing in the proximity thereof.

5. Seal according to claim 3, wherein the deoiling element (19) comprises a metal foam at its perimeter to centrifuge the oil drops developing in the proximity thereof.

6. Aircraft engine equipped with an accessory power transmission, comprising a contactless seal (1) according to claim 1.
